# EUROPEAN PATENT SPECIFICATION

(11) **EP 4 138 336 B1**
(45) Date of publication and mention of the grant of the patent: **19.11.2025**
(21) Application number: 20950522.1
(22) Date of filing: 24.08.2020
(51) Int. Cl.: H04L 69/16

(54) **COMMUNICATION DATA PROCESSING METHOD AND APPARATUS**
VERFAHREN UND VORRICHTUNG ZUR VERARBEITUNG VON KOMMUNIKATIONSDATEN
PROCÉDÉ ET APPAREIL DE TRAITEMENT DE DONNÉES DE COMMUNICATION

(43) Date of publication of application: 22.02.2023
(73) Proprietor: CRRC Zhuzhou Electric Locomotive Research Institute Co., Ltd., Zhuzhou, Hunan 412001 (CN)
(72) Inventor: SHANG, Jing, Zhuzhou, Hunan 412001 (CN); TANG, Jun, Zhuzhou, Hunan 412001 (CN); LU, Qi, Zhuzhou, Hunan 412001 (CN); HAO, Bo, Zhuzhou, Hunan 412001 (CN); ZHOU, Xuexun, Zhuzhou, Hunan 412001 (CN); JIANG, Guotao, Zhuzhou, Hunan 412001 (CN); QUAN, Qinghua, Zhuzhou, Hunan 412001 (CN); REN, Maohua, Zhuzhou, Hunan 412001 (CN); SHEN, Chaoqun, Zhuzhou, Hunan 412001 (CN); WANG, Wenxin, Zhuzhou, Hunan 412001 (CN)
(74) Representative: Herrmann, Uwe
(86) International application number: PCT/CN2020/110730
(87) International publication number: WO 2022/040847

(56) References cited:
- CN-A- 1 642 142
- CN-A- 105 610 876
- CN-A- 111 131 194
- US-A1- 2005 111 385
- US-A1- 2009 063 696
- US-A1- 2010 235 465

## Description

### FIELD

The present disclosure relates to the field of communication technology, and in particular to a method and a device for communication data processing.

### BACKGROUND

With the development of science and technology, various transportation vehicles, such as trains, are provided with communication networks. A train communication network, known as a "brain" and "nerve" of the trains, is mainly used to transmit control data, monitoring data, fault data, maintenance data, service data and other communication data of trains. The train communication network is an important system for ensuring train safety and improving rail transit service quality. With the popularization of Ethernet technology, a network control system based on Ethernet technology becomes a development trend of the train communication network.

In a conventional train communication network based on Ethernet technology, train communication data is usually processed and transmitted through central processor units of relevant apparatus in the network. In a case that a large amount of data needs to be processed and transmitted, resources of the central processor units of the apparatuses may be insufficient and thus real-time and reliability of various tasks cannot be guaranteed.

US 2005/111385 A1 discloses a multimedia communication device using software and hardware protocol stacks and a communication method thereof. In US 2005/111385 A1, a multimedia communication device using a software protocol stack and a hardware protocol stack, a communication method thereof, and a computer program product are provided. The multimedia communication device includes: a hardware protocol stack processing a packet using hardware; and a software protocol stack processing the packet using software. According to the device and method, while the overhead to the CPU can be reduced to enhance the processing speed, a large volume of multimedia data can be transmitted at a higher speed without a limit to the number of channels that can be supported at the same time.

### SUMMARY

The present disclosure is intended to provide a method and a device for communication data processing, in order to at least solve the problem of insufficient resources of the central processor units.

A device for communication data processing is provided in the present disclosure, in order to ensure implementations and applications of the method in practice.

A method for communication data processing is provided. The method is applied to an Ethernet protocol stack device of a communication data processing apparatus. The Ethernet protocol stack device is connected to a central processor unit CPU. The Ethernet protocol stack device includes at least a software TCP/IP channel and a hardware TCP/IP channel. The hardware TCP/IP channel includes a hardware TCP/IP protocol stack, and the CPU is provided with a software TCP/IP protocol stack. The method includes: determining a data type of communication data sent by a preset data sending node, on reception of the communication data within a preset data transmission cycle; determining whether the communication data satisfies a preset condition for data processing, on determining that the communication data is of a real-time data type; transmitting the communication data through the hardware TCP/IP channel, on determining that the communication data satisfies the preset condition for data processing, so that the hardware TCP/IP protocol stack performs de-encapsulation on the communication data to obtain target real-time data, which is sent to the CPU; and sending the communication data to the CPU through the software TCP/IP channel, on determining that the communication data is of a non-real-time data type, so that the CPU processes the communication data based on the software TCP/IP protocol stack, wherein determining the data type of the communication data includes: obtaining a type field of the communication data; and determining the data type of the communication data based on the type field.

In an embodiment, the method further includes: determining a data type of a data frame sent by the CPU, on reception of the data frame within the data transmission cycle; transmitting the data frame through the hardware TCP/IP channel, on determining that the data frame is of a real-time data type, so that the hardware TCP/IP protocol stack performs encapsulation on the data frame, and sending the encapsulated data frame to a preset data receiving node; and sending the data frame to a preset data receiving node through the software TCP/IP channel on determining that the data frame is of a non-real-time data type.

In an embodiment, sending the encapsulated data frame to the preset data receiving node includes: determining, based on scheduling information, a sending time instant corresponding to the encapsulated data frame; determining, at the sending time instant, whether there is non-real-time data being transmitted at the sending time instant; and ceasing transmission of the non-real-time data and sending the encapsulated data frame to the data receiving node on determining that there is non-real-time data being transmitted at the sending time instant.

In an embodiment, sending the encapsulated data frame to the preset data receiving node includes: determining whether there is to-be-transmitted real-time data at present; determining a transmission priority of the data frame and a transmission priority of the to-be-transmitted real-time data, on determining that there is to-be-transmitted real-time data at present; determining a sending time instant of the data frame based on scheduling information, the transmission priority of the data frame, and the transmission priority of the to-be-transmitted real-time data; determining, at the sending time instant, whether there is non-real-time data being transmitted at the sending time instant; and ceasing transmission of the non-real-time data and sending the encapsulated data frame to the data receiving node on determining that there is non-real-time data being transmitted at the sending time instant.

In an embodiment, the method further includes: determining, in response to a time synchronization instruction, whether a clock corresponding to the Ethernet protocol stack device is a master clock; on determining that the clock corresponding to the Ethernet protocol stack device is the master clock, generating a time synchronization message, and sending the time synchronization message to a communication data processing apparatus containing a to-be-synchronized clock corresponding to the clock, to trigger a CPU of the communication data processing apparatus to perform clock synchronization based on the time synchronization message on reception of the time synchronization message, where the time synchronization message includes a timestamp; and entering the data transmission cycle, on determining that the communication data processing apparatus finishes the clock synchronization after receiving the time synchronization message.

In an embodiment, determining whether the communication data satisfies the preset condition for data processing includes: determining, based on a node identification in the communication data, whether the data sending node is in a restricted state; determining, based on preset scheduling information, whether the communication data satisfies a scheduling condition; determining whether there is redundant data corresponding to the communication data; and determining that the communication data satisfies the preset condition for data processing on determining that the data sending node is in the restricted state, the communication data satisfies the scheduling condition, and there is no redundant data corresponding to the communication data.

In an embodiment, determining, based on the preset scheduling information, whether the communication data satisfies the scheduling condition includes: determining, based on the scheduling information, whether a current communication timeslot is a real-time communication timeslot; determining that the communication data satisfies the scheduling condition, on determining that the current communication timeslot is a real-time communication timeslot; and determining that the communication data does not satisfy the scheduling condition, on determining that the current communication timeslot is a non-real-time communication timeslot.

A device for communication data processing is provided. The device is applied to an Ethernet protocol stack device of a communication data processing apparatus. The Ethernet protocol stack device is connected to a central processor unit CPU. The Ethernet protocol stack device includes at least a software TCP/IP channel and a hardware TCP/IP channel. The hardware TCP/IP channel includes a hardware TCP/IP protocol stack, the CPU is provided with a software TCP/IP protocol stack. The device for communication data processing includes: a receiving unit, configured to determine a data type of communication data sent by a preset data sending node, on reception of the communication data within a preset data transmission cycle; a detection unit, configured to determine whether the communication data satisfies a preset condition for data processing, on determining that the communication data is of a real-time data type; transmit the communication data through the hardware TCP/IP channel, on determining that the communication data satisfies the preset condition for data processing, so that the hardware TCP/IP protocol stack performs de-encapsulation on the communication data to obtain target real-time data, which is sent to the CPU; and a first sending unit, configured to send the communication data to the CPU through the software TCP/IP channel, on determining that the communication data is of a non-real-time data type, so that the CPU processes the communication data based on the software TCP/IP protocol stack, wherein the receiving unit includes: an acquisition subunit, configured to obtain a type field of the communication data; and a second determination subunit, configured to determine the data type of the communication data based on the type field.

In an embodiment, the device further includes a second sending unit. The second sending unit is configured to: determine a data type of a data frame sent by the CPU, on reception of the data frame within the data transmission cycle; transmit the data frame through the hardware TCP/IP channel, on determining that the data frame is of a real-time data type, so that the hardware TCP/IP protocol stack performs encapsulation on the data frame, and send the encapsulated data frame to a preset data receiving node; and send the data frame to a preset data receiving node through the software TCP/IP channel, on determining that the data frame is of a non-real-time data type.

In an embodiment, the second sending unit, when sending the encapsulated data frame to the preset data receiving node, is configured to: determine, based on scheduling information, a sending time instant corresponding to the encapsulated data frame; determine, at the sending time instant, whether there is non-real-time data being transmitted at the sending time instant; and cease transmission of the non-real-time data and send the encapsulated data frame to the data receiving node, on determining that there is non-real-time data being transmitted at the sending time instant.

In an embodiment, the second sending unit, when sending the encapsulated data frame to the preset data receiving node, is configured to: determine whether there is to-be-transmitted real-time data at present; determine a transmission priority of the data frame and a transmission priority of the to-be-transmitted real-time data, on determining that there is to-be-transmitted real-time data at present; determine a sending time instant of the data frame based on scheduling information, the transmission priority of the data frame, and the transmission priority of the to-be-transmitted real-time data; determine, at the sending time instant, whether there is non-real-time data being transmitted at the sending time instant; and cease transmission of the non-real-time data and send the encapsulated data frame to the data receiving node, on determining that there is non-real-time data being transmitted at the sending time instant.

In an embodiment, the device further includes a clock synchronization unit. The clock synchronization unit is configured to: determine, in response to a time synchronization instruction, whether a clock corresponding to the Ethernet protocol stack device being a master clock; on determining that the clock corresponding to the Ethernet protocol stack device is the master clock, generate a time synchronization message, and send the time synchronization message to a communication data processing apparatus containing a to-be-synchronized clock corresponding to the clock, to trigger a CPU of the communication data processing apparatus to perform clock synchronization based on the time synchronization message on reception of the time synchronization message, where the time synchronization message includes a timestamp; and enter the data transmission cycle, on determining that the communication data processing apparatus finishes the clock synchronization after receiving the time synchronization message.

In an embodiment, the detection unit includes: a first detection subunit, configured to determine, based on a node identification in the communication data, whether the data sending node is in a restricted state; a second detection subunit, configured to determine, based on preset scheduling information, whether the communication data satisfies a scheduling condition; a third detection subunit, configured to determine whether there is redundant data corresponding to the communication data; and a first determination subunit, configured to determine that the communication data satisfies the preset condition for data processing in response to the first detection subunit determining that the data sending node is in the restricted state, the second detection subunit determining that the communication data satisfies the scheduling condition, and the third detection subunit determining that there is no redundant data corresponding to the communication data.

In an embodiment, the second detection subunit is configured to: determine, based on the scheduling information, whether a current communication timeslot is a real-time communication timeslot; determine that the communication data satisfies the scheduling condition, on determining that the current communication timeslot is a real-time communication timeslot; and determine that the communication data does not satisfy the scheduling condition, on determining that the current communication timeslot is a non-real-time communication timeslot.

Advantageous of the present disclosure in comparison with the conventional technology are described below.

A method and a device for communication data processing are provided in the present disclosure, which are applied to an Ethernet protocol stack device of a communication data processing apparatus. The Ethernet protocol stack device is connected to a central processor unit CPU. The Ethernet protocol stack device includes at least a software TCP/IP channel and a hardware TCP/IP channel. The hardware TCP/IP channel includes a hardware TCP/IP protocol stack, and the CPU is provided with a software TCP/IP protocol stack. The method includes: determining a data type of communication data sent by a preset data sending node, on reception of the communication data within a preset data transmission cycle; determining whether the communication data satisfies a preset condition for data processing, on determining that the communication data is of a real-time data type; on determining that the communication data satisfies the preset condition for data processing, transmitting the communication data through the hardware TCP/IP channel, so that the hardware TCP/IP protocol stack performs de-encapsulation on the communication data to obtain target real-time data, and sending the target real-time data to the CPU; and sending the communication data to the CPU through the software TCP/IP channel, on determining that the communication data is of a non-real-time data type. With the method provided in the present disclosure, a system can be simplified, dependence on peripheral devices can be reduced, and operation requirements for various protocols can be reduced. A single chip system is integrated using hardware logics, and a hardware protocol stack is designed correspondingly to replace the software TCP/IP protocol stack, so that the problem of high resource occupation on a CPU when operating a protocol stack is solved. The system where the communication data processing apparatus is located further adopts high-precision clock synchronization, so that apparatuses in the system can rely on accurate global synchronization time to ensure reliable transmission of real-time data frames within certain accuracy. On this basis, each of apparatuses in the system is allocated with a corresponding schedule, so that the apparatuses can schedule and manage data over the whole system based on respective schedules, thereby ensuring the communication without any conflict.

### BRIEF DESCRIPTION OF THE DRAWINGS

In order to more clearly illustrate technical solutions in embodiments of the present disclosure or in the conventional technology, drawings to be used in the description of the embodiments or the conventional technology are briefly described below. Apparently, the drawings described below are merely for embodiments of the present disclosure. Other drawings may be obtained by those skilled in the art from the drawings without any creative effort.
Figure 1 is a flowchart of a method for communication data processing according to an embodiment of the present disclosure.
Figure 2 is a flowchart of a process of determining whether communication data satisfies a scheduling condition according to an embodiment of the present disclosure.
Figure 3 shows an example of scheduling information according to an embodiment of the present disclosure.
Figure 4 is a schematic structural diagram of a device for communication data processing according to an embodiment of the present disclosure.
Figure 5 is a schematic structural diagram of a communication data processing apparatus according to an embodiment of the present disclosure.
Figure 6 is a schematic structural diagram of a communication data processing apparatus according to another embodiment of the present disclosure.
Figure 7 is s schematic structural diagram of a communication data processing apparatus according to yet another embodiment of the present disclosure.
Figure 8 is a schematic structural diagram of a system for communication data processing according to an embodiment of the present disclosure.
Figure 9 is a flowchart of time synchronization of a system for communication data processing according to an embodiment of the present disclosure.
Figure 10 is a flowchart of a process of sending data according to an embodiment of the present disclosure.
Figure 11 is a flowchart of a process of receiving data according to an embodiment of the present disclosure.

### DETAILED DESCRIPTION

Hereinafter technical solutions in embodiments of the present disclosure are described clearly and completely in conjunction with the drawings and embodiments of the present closure. Apparently, the described embodiments are only some of, rather than all, the embodiments of the present disclosure.

The present disclosure is applicable to various general or dedicated computing device environments or configurations, such as personal computers, server computers, handheld devices or portable devices, tablet devices, multi-processor devices, and distributed computing environments including any of the above devices.

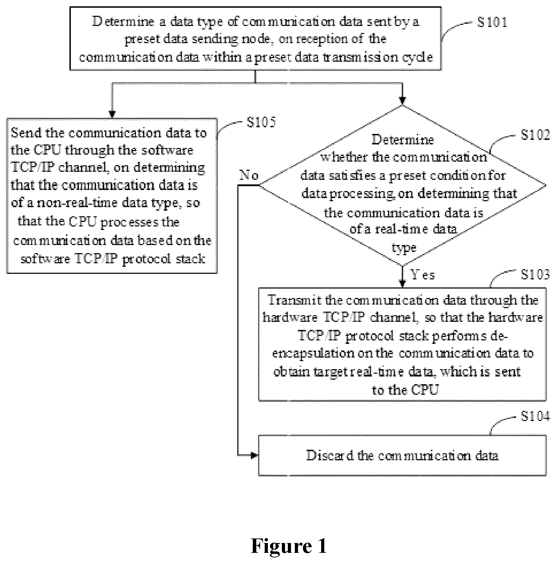

A method for communicate data processing is provided in an embodiment of the present disclosure. The method is applied to an Ethernet protocol stack device of a communication data processing apparatus. The Ethernet protocol stack device is connected to a central processor unit CPU. The Ethernet protocol stack device includes at least a software TCP/IP channel and a hardware TCP/IP channel. The hardware TCP/IP channel includes a hardware TCP/IP protocol stack. The CPU is provided with a software TCP/IP protocol stack. The Ethernet protocol stack device may be a field programmable gate array FPGA, a CPLD, or the like. Reference is made to Figure 1, which shows a flowchart of the method according to an embodiment. The method specifically includes S101 to S105.

In S101, a data type of communication data sent by a preset data sending node is determined on reception of the communication data within a preset data transmission cycle.

After entering the data transmission cycle, the communication data may be received through a preset network interface. The data type of the communication data may be determined on reception of the communication data. The communication data may be of a real-time data type or a non-real-time data type.

In an example, the communication data processing apparatus and the data sending node may belong to a same communication data processing system. The communication data processing apparatus and the data sending node serve as data transmission nodes in the communication data processing system. Before entering the data transmission cycle, the data transmission nodes in the communication data processing system may perform clock synchronization, and each of preset schedules may be sent to a corresponding one of the data transmission nodes. That is, each of the data transmission nodes has a corresponding schedule. The data sending node may be another communication data processing apparatus or a switch among the communication data processing nodes.

In S102, it is determined whether the communication data satisfies a preset condition for data processing, on determining that the communication data is of a real-time data type. The method proceeds to S103 on determining that the communication data satisfies the preset condition for data processing. The method proceeds to S104 in response to the communication data not satisfying the preset condition for data processing.

In the method according to an embodiment of the present disclosure, the condition for data processing may include one or more of a flow control condition, a scheduling condition and a redundancy condition.

In an example, the flow control condition may refer to that the communication data is data that is allowed to receive. Specifically, whether the data is the data that is allowed to receive may be determined based on a preset whitelist or blacklist; or otherwise, whether the data is the data that is allowed to receive may be determined may be determined through an overall flow control. The blacklist or whitelist may be set based on an IP address, an MAC address, a port number, and a protocol type, of communication data.

The scheduling condition may refer to that the data type of the communication data matches a current communication timeslot. In a case that the communication data is in a real-time data type, and the current communication timeslot is a real-time communication timeslot, it indicates that the data type of the communication data matches the current communication timeslot, which may be determined by scheduling information in a schedule. The scheduling information includes a correspondence between communication data and communication timeslots.

The redundancy condition may refer to that there is no redundant data corresponding to the communication data. In other words, in a case that there is already redundant data corresponding to the communication data, the communication data is not processed. In an example, in order to ensure reliability of data transmission, the communication data may be copied at a sending end, and copies of the communication data may be transmitted through redundant networks corresponding to different network ports. Therefore, during a transmission of the communication data, same data may be received at different network ports, that is, multiple copies of the same data may be received. In such case, elimination of redundancy may be performed to remove duplicate copies of the communication data. A specific principle of "first come, first take effect" may be adopted, so that the communication data is processed in a case that there is no redundant data corresponding to the communication data. In a case that there is already redundant data, it indicates that the data consistent with the communication data is previously received, and therefore the communication data may be eliminated.

In S103, the communication data is transmitted through the hardware TCP/IP channel, so that the hardware TCP/IP protocol stack performs corresponding de-encapsulation processing on the communication data to obtain target real-time data; and the target real-time data is sent to the CPU.

In the method according to an embodiment of the present disclosure, the hardware protocol stack may be a hardware TCP/IP protocol stack. The hardware TCP/IP protocol stack can realize encapsulation and de-encapsulation of a link layer frame, sending and receiving of an ARP message, updating and maintenance of a high-speed APR table, encapsulation and de-encapsulation of an IP message, encapsulation and de-encapsulation of a UDP message, encapsulation and de-encapsulation of a TCP message, connection management, device discovery protocol, and other functions, and can further realize an IGMPV1/V2 and ICMP ping echo function.

In an example, the target real-time data obtained after processing by the hardware protocol stack is of a real-time data type. The hardware TCP/IP protocol stack may perform a corresponding processing on the communication data based on a data frame format of the communication data. For example, in a case that the communication data is an encapsulated IP message, the processing on the communication data may be de-encapsulation of the IP message; in a case that the communication data is a to-be-encapsulated UDP message, the processing on the communication data may be encapsulation of the UDP message; and the like.

The Ethernet protocol stack device may be connected to the CPU via preset hardware driver layer software, so that an interface of the Ethernet protocol stack device is compatible with a software protocol stack interface, and thereby the Ethernet protocol stack device can interact with the CPU. In an example, after receiving the target real-time data sent by the Ethernet protocol stack device via the hardware TCP/IP channel, the CPU performs a corresponding logical processing on the target real-time data, and it is unnecessary to unpack the target real-time data.

In S104, the communication data is discarded.

In S105, the communication data is sent to the CPU through the software TCP/IP channel on determining that the communication data is of a non-real-time data type, so that the CPU processes the communication data based on the software TCP/IP protocol stack.

In the method according to an embodiment of the present disclosure, after receiving the communication data in the non-real-time data type, the CPU may perform de-encapsulation on the communication data.

With the method provided in the embodiments of the present disclosure, in a case that the communication data is of the real-time data type, the communication data may be processed by using the hardware protocol stack, and the target real-time data obtained after processing may be sent to the CPU; and in a case that the communication data is of the non-real-time data type, the communication may be sent to the CPU by using the software TCP/IP channel. Hence, a distribution of the communication data is realized. That is, the communication data in the real-time data type is transmitted through the TCP/IP protocol channel in the Ethernet protocol stack device, so that the hardware protocol stack can process the communication data in the real-time data type; and the communication data in the non-real-time data type is transmitted through the software TCP/IP channel, so that the software protocol stack of the CPU can perform a de-encapsulation on the communication data of the non-real-time data type corresponding to the data frame format of the communication data. Thereby, consumption of the communication data on CPU protocol stack resources may be reduced, and an efficiency of the hardware protocol stack can be improved.

The method for communication data processing provided by the embodiments of the present disclosure can be applied in a variety of fields, for example, in various application fields of the Ethernet protocol technology, such as the train communication system, a ship communication system, and an intelligent factory data transmission system. With the increasing demand for high bandwidth, high speed, good flexibility, intelligence, easy management, and high real-time of Ethernet applications, not only the processor is required to develop various protocols to provide corresponding supports, but higher and higher requirements for supporting hardware resources and software resources are also put forward. A conventional design concept is to use a higher end processor, match a FLASH having a higher capacity and a RAM having a higher speed and other high-performance hardware support, and develop and transplant various operating systems, and repeatedly develop various corresponding drivers for different hardware. However, it is difficult for such design to meet demands of applications with high requirements such as small size, easy configuration, low power consumption, high flexibility, low cost, ultra-high speed or massive data processing. In the embodiments of the present disclosure, in order to simplify the system, reduce dependence on peripheral devices, and reduce operation requirements of various protocols, a hardware logical integrated single-chip system is used, and corresponding hardware protocol stacks are developed in place of software protocol stacks, so as to solve the problem that the CPU operation protocol stack occupies too much resources. The embodiments of the present disclosure provide an Ethernet protocol stack device having a mixed structure of software and hardware. The Ethernet protocol stack device is used to realize a full hardware TCP/IP protocol stack. on reception of communication data sent by a preset data sending node within a preset data transmission cycle, a data type of the communication data is determined; on determining that the communication data is of a real-time data type, it is determined whether the communication data satisfies a condition for data processing; on determining that the communication data satisfies the condition for data processing, the communication data is transmitted through the hardware TCP/IP channel, so that the hardware TCP/IP protocol stack performs de-encapsulation on the communication data to obtain target real-time data, and the target real-time data is sent to the CPU; and on determining that the communication data is of a non-real-time data type, the communication data is sent to the CPU through software TCP/IP channel, and is processed by the software protocol stack of the CPU. With the method provided in the embodiments of the present disclosure, the existing problem of high occupation of processor resources in an embedded application products developed based on software TCP/IP protocol stack can be solved.

On the basis of the above-described process, the method according to an embodiment of the present disclosure specifically includes: determining a data type of a data frame transmitted by the CPU, on reception of the data frame within the data transmission cycle; on determining that the data frame is of a real-time data type, transmitting the data frame through the hardware TCP/IP channel, so that the hardware TCP/IP protocol stack performs encapsulation on the data frame, and sending the encapsulated data frame to a preset data receiving node; and on determining that the data frame is of a non-real-time data type, sending the data frame to the preset data receiving node through the software TCP/IP channel.

In the method according to an embodiment of the present disclosure, the communication data processing apparatus and the data receiving node may be located in a same communication data processing system. The communication data processing apparatus and the data receiving nodes serve as data transmission nodes in the communication data processing system. The data transmission nodes in the communication data processing system may perform clock synchronization before entering the data transmission cycle.

In a process of data transmission based on the hardware TCP/IP channel or the software TCP/IP channel, a communication timeslot of each data frame may be determined based on scheduling information, so that the data frame can be sent to a corresponding data receiving node in a communication timeslot corresponding to the data frame.

In an example, a real-time data frame in the hardware TCP/IP channel may be transmitted to a corresponding data receiving node in a real-time communication timeslot, and a non-real-time data frame in the software TCP/IP channel may be transmitted to a corresponding data receiving node in a non-real-time communication timeslot.

In a case that the data frame is of the non-real-time data type, it indicates that the data frame is encapsulated by the software TCP/IP protocol stack of the CPU.

On the basis of the above-described process, in the method according to an embodiment of the present disclosure, a possible way to send the encapsulated data frame to the preset data receiving node may specifically include: determining, based on scheduling information, a sending time instant corresponding to the encapsulated data frame; determining, at the sending time instant, whether there is non-real-time data being transmitted at the sending time instant; and ceasing transmission of the non-real-time data and sending the encapsulated data frame to the data receiving node, on determining that there is non-real-time data being transmitted at the sending time instant.

In the method according to an embodiment of the present disclosure, the sending time instant of the data frame may be determined based on a volume of to-be-transmitted real-time data and the real-time communication timeslot in the scheduling information. The to-be-transmitted real-time data may be the data frame in the real-time data type received in advance, and the sending time instant may be within the real-time communication timeslot. Within the real-time communication timeslot, non-real-time data may be transmitted in response to there being no real-time data to be transmitted, and transmission of the non-real-time data may be ceased on determining that there is to-be-transmitted real-time data at present.

In an example, at the sending time instant in the real-time communication timeslot, the data frame in the real-time data type may be transmitted to the data receiving node in response to there being no non-real-time data being transmitted at present. The data frame may be transmitted to the data receiving node via a network interface through a transmission channel corresponding to the hardware protocol stack.

With the method provided in the embodiment of the present disclosure, the target real-time data is transmitted based on the scheduling information. Hence, a deterministic scheduling for data transmission can be realized, so as to avoid any conflict in the data transmission.

On the basis of the above-described process, in the method according to an embodiment of the present disclosure, another possible way to send the encapsulated data frame to the preset data receiving node may specifically include: determining whether there is to-be-transmitted real-time data at present; determining a transmission priority of the data frame and a transmission priority of the to-be-transmitted real-time data, on determining that there is to-be-transmitted real-time data at present; determining a sending time instant of the data frame based on the scheduling information, the transmission priority of the data frame, and the transmission priority of the to-be-transmitted real-time data; determining, at the sending time instant, whether there is non-real-time data being transmitted at the sending time instant; and ceasing transmission of the non-real-time data and sending the encapsulated data frame to the data receiving node, on determining that there is non-real-time data being transmitted at the sending time instant.

In the method according to an embodiment of the present disclosure, a priority may be set for each communication data in advance, and the priority of the communication data may be determined based on an importance of a task corresponding to the communication data.

In a case that there are multiple real-time data to be transmitted, transmission of the real-time data may be in a chronological order; or otherwise, transmission priorities of the real-time data may be determined, and the real-time data is transmitted according to the transmission priorities from high to low. That is, the sending time instants of the target real-time data depend on the transmission priorities.

In an example, the to-be-transmitted real-time data may be real-time data that is before the real-time data frame and is to be sent to the data receiving node. That is, the to-be-transmitted real-time data is currently cached real-time data.

The real-time communication timeslot required by each to-be-transmitted real-time data whose priority is higher than the priority of the real-time data frame may be determined. The sending time instant of the data frame may be further determined additionally based on the scheduling information. The scheduling information may record a correspondence between data types and types of communication timeslot.

In an example, the real-time data frame may be transmitted to the data receiving node in response to there being no non-real-time data being transmitted.

On the basis of the above-described process, the method according to an embodiment of the present disclosure further includes: determining, in response to a time synchronization instruction, whether a clock corresponding to the Ethernet protocol stack device is a master clock; on determining that the clock corresponding to the Ethernet protocol stack device is the master clock, generating a time synchronization message, and sending the time synchronization message to a communication data processing apparatus containing a to-be-synchronized clock corresponding to the clock, to trigger a CPU of the communication data processing apparatus to perform clock synchronization based on the time synchronization message on reception of the time synchronization message, where the time synchronization message includes a timestamp; and entering the data transmission cycle, on determining that the communication data processing apparatus finishes the clock synchronization after receiving the time synchronization message.

In the method according to an embodiment of the present disclosure, whether the clock corresponding to the Ethernet protocol stack device is a master clock is determined by powering on a target clock in response to the time synchronization instruction.

In response to the clock corresponding to the Ethernet protocol stack device being not the master clock, it is determined that the clock corresponding to the Ethernet protocol stack device is a slave clock, that is, a to-be-synchronized clock. In such case, on reception of the time synchronization message, the CPU of the communication data processing apparatus performs time synchronization based on the timestamp in the time synchronization message. When the clock synchronization converges, the clock synchronization is completed and the data transmission cycle starts.

In an example, after the time synchronization message is sent from the communication data processing apparatus to which the master clock belongs to the communication data processing apparatus to which the to-be-synchronized clock belongs, the CPU corresponding to the to-be-synchronized clock calculates a link delay and a clock skew based on the time stamp information in the time synchronization message, and corrects the to-be-synchronized clock, so as to achieve convergence of the clock synchronization.

With the method provided in the embodiments of the present disclosure, the clock synchronization of the communication data processing system where the communication data processing apparatus is located can be realized. The communication data processing system includes communication data processing apparatuses, switchers and other data communication nodes. Therefore, the clock synchronization of various data communication nodes in the communication data processing system can be realized.

On the basis of the above-described process, in the method according to an embodiment of the present disclosure, determining whether the communication data satisfies the preset condition for data processing includes: determining, based on a node identification in the communication data, whether the data sending node is of a restricted state; determining, based on preset scheduling information, whether the communication data satisfies a scheduling condition; determining whether there is redundant data corresponding to the communication data; and determining that the communication data satisfies the preset condition for data processing on determining that the data sending node is in the restricted state, the communication data satisfies the scheduling condition, and there is no redundant data corresponding to the communication data.

In the method according to an embodiment of the present disclosure, a sender identification may be an ID of a device that sends the communication data, for example, the identification may be one or more of an IP address, an MAC address, a port number, or the like.

In an example, a preset configuration file may be traversed to obtain state information of the data sending node corresponding to the node identification, and it is determined, based on the state information, whether the data sending node is in the restricted state. The configuration file records state information of each data sending node. The configuration file may be set based on an actual requirement.

The scheduling information includes micro-cycle information and macro-cycle information. The micro-cycle information records communication timeslots corresponding to different data types. The types of the communication timeslots may include a real-time communication timeslot and a non-real-time communication time-slot. In the real-time communication timeslot, communication data in the real-time data type may be transmitted preferentially; while in the non-real-time communication timeslot, communication data in the non-real-time data type may be transmitted.

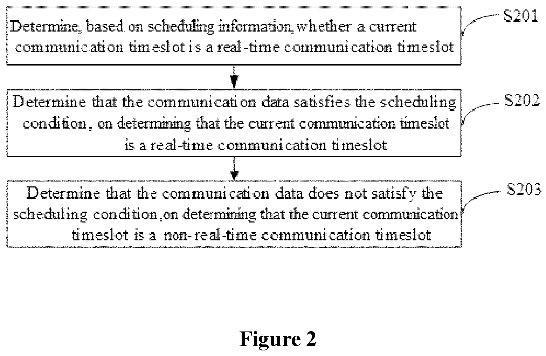

On the basis of the above-described process, in the method according to an embodiment of the present disclosure, the determining, based on the preset scheduling information, whether the communication data satisfies the scheduling condition specifically includes S201 to S203 below. Reference is made to Figure 2.

In S201, it is determined, based on the scheduling information, whether a current communication timeslot is a real-time communication timeslot.

In the method according to an embodiment of the present disclosure, the scheduling information records cycle information. The cycle information includes a communication cycle. The cycle information is dependent on a micro-cycle and a macro-cycle. The micro-cycle is a minimum scheduling unit of real-time scheduling information, and the macro-cycle is a minimum interval for the cycle information to repeat according to a certain rule. In an example, the micro-cycle may be a maximum common divisor of all communication cycles, and the macro-cycle may be a least common multiple of the all communication cycles.

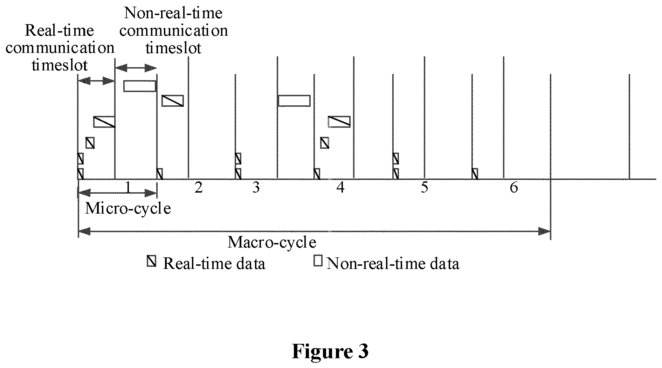

Each micro-cycle may include a real-time communication timeslot and a non-real-time communication timeslot divided in a certain proportion. In the real-time communication timeslot, transmission is planned based on a period and processing time of each real-time communication event. Reference is made to Figure 3, which shows a schematic structural diagram of scheduling information according to an embodiment of the present disclosure. The macro-cycle may be composed of multiple micro-cycles. In a micro-cycle, a real-time communication timeslot and a non-real-time communication timeslot may be set. Real-time data may be transmitted through the real-time communication timeslot, and non-real-time data may be transmitted in the non-real-time communication timeslot. In an example, the scheduling information is read from a preset schedule.

In S202, it is determined that the communication data satisfies the scheduling information, on determining that the current communication timeslot is a real-time communication timeslot.

In a case that the communication data is of the real-time data type and the current communication timeslot is the real-time communication timeslot, it is determined that the communication data satisfies the scheduling condition.

In S203, it is determined that the communication data does not satisfy the scheduling condition, on determining that the current communication timeslot is a non-real-time communication timeslot.

In a case that the communication data is of the real-time data type and the current communication timeslot is the non-real-time communication timeslot, it is determined that the communication data does not satisfy the scheduling condition.

On the basis of the above-described process, in the method according to an embodiment of the present disclosure, the determining the data type of the communication data specifically includes: obtaining a type field of the communication data; and determining the data type of the communication data based on the type field.

In the method according to an embodiment of the present disclosure, the communication data includes a type field. A data frame of the communication data may be of a standard Ethernet frame format, and the type field may be the type field for an Ethernet frame.

The data type of the communication data may be determined based on a value of the type field. The data type may be a time synchronization message type, a real-time data type, or a non-real-time data type.

With the method provided by the embodiments of the present disclosure, the data type of the communication data may be determined by acquiring the type field of the communication data during transmission, and then a corresponding processing strategy for the communication data may be determined. For example, in a case that the communication data is of the real-time data type, the communication data may be processed through the hardware protocol stack, and the processed data may be then sent to the CPU. In a case that the communication data is of the non-real-time data type, the communication data may be sent to the CPU through the software TCP/IP channel. Thereby, data scheduling can be completed reasonably.

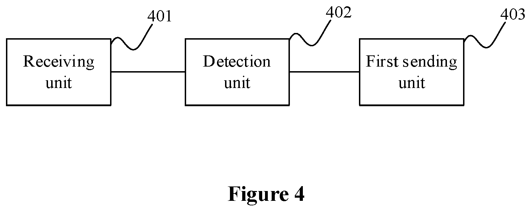

Corresponding to the method described with reference to Figure 1, a device for communication data processing is further provided in an embodiment of the present disclosure, in order to implement the method as shown in Figure 1. The device for communication data processing provided in the embodiment of the present disclosure is applied to an Ethernet protocol stack device of a communication data processing apparatus. The Ethernet protocol stack device is connected to a central processor unit CPU. The Ethernet protocol stack device includes at least a software TCP/IP channel and a hardware TCP/IP channel. The hardware TCP/IP channel includes a hardware TCP/IP protocol stack. The CPU is provided with a software TCP/IP protocol stack. Figure 4 shows a schematic structural diagram of a device for communication data processing according to an embodiment of the present disclosure. The device specifically includes a receiving unit 401, a detection unit 402, and a first sending unit 403.

The receiving unit 401 is configured to determine a data type of communication data sent by a preset data sending node, on reception of the communication data within a preset data transmission cycle.

The detection unit 402 is configured to: determine whether the communication data satisfies a preset condition for data processing, on determining that the communication data is of a real-time data type; on determining that the communication data satisfies the preset condition for data processing, transmit the communication data through the hardware TCP/IP channel, so that the hardware TCP/IP protocol stack performs de-encapsulation on the communication data to obtain target real-time data; and send the target real-time data to the CPU.

The first sending unit 403 is configured to send the communication data to the CPU through the software TCP/IP channel, on determining that the communication data is of a non-real-time data type, so that the CPU processes the communication data based on the software TCP/IP protocol stack.

In an embodiment of the present disclosure, on the basis of the above solution, the device further includes a second sending unit. The second sending unit is configured to: determine a data type of a data frame sent by the CPU, on reception of the data frame within the data transmission cycle; on determining that the data frame is of a real-time data type, transmit the data frame through the hardware TCP/IP channel, so that the hardware TCP/IP protocol stack performs encapsulation on the data frame, and send the encapsulated data frame to a preset data receiving node; and on determining that the data frame is of a non-real-time data type, send the data frame to the preset data receiving node through the software TCP/IP channel.

In an embodiment of the present disclosure, on the basis of the above solution, the second sending unit, when sending the encapsulated data frame to a preset data receiving node, is configured to: determine, based on scheduling information, a sending time instant corresponding to the encapsulated data frame; determine, at the sending time instant, whether there is non-real-time data being transmitted at the sending time instant; and cease transmission of the non-real-time data and send the encapsulated data frame to the data receiving node, on determining that there is non-real-time data being transmitted at the sending time instant.

In an embodiment of the present disclosure, based on the above solution, the second sending unit, when sending the encapsulated data frame to a preset data receiving node, is configured to: determine whether there is to-be-transmitted real-time data at present; determine a transmission priority of the data frame and a transmission priority of the to-be-transmitted real-time data, on determining that there is to-be-transmitted real-time data at present; determine a sending time instant of the data frame based on scheduling information, the transmission priority of the data frame, and the transmission priority of the to-be-transmitted real-time data; determine, at the sending time instant, whether there is non-real-time data being transmitted at the sending time instant; and cease transmission of the non-real-time data and send the encapsulated data frame to the data receiving node, on determining that there is non-real-time data being transmitted at the sending time instant.

In an embodiment of the present disclosure, based on the above solution, the device further includes a clock synchronization unit.

The clock synchronization unit is configured to: determine, in response to a time synchronization instruction, whether a clock corresponding to the Ethernet protocol stack device is a master clock; on determining that the clock corresponding to the Ethernet protocol stack device is the master clock, generate a time synchronization message, and send the time synchronization message to a communication data processing apparatus containing a to-be-synchronized clock corresponding to the clock, to trigger a CPU of the communication data processing apparatus to perform clock synchronization based on the time synchronization message on reception of the time synchronization message, where the time synchronization message includes a timestamp; and enter the data transmission cycle, on determining that the communication data processing apparatus finishes the clock synchronization after receiving the time synchronization message.

In an embodiment of the present disclosure, based on the above solution, the detection unit 402 specifically includes a first detection subunit, a second detection subunit, a third detection subunit, and a first determination subunit.

The first detection subunit is configured to determine, based on a node identification in the communication data, whether the data sending node is in a restricted state.

The second detection subunit is configured to determine, based on preset scheduling information, whether the communication data satisfies a scheduling conditions.

The third detection subunit is configured to determine whether there is no redundant data corresponding to the communication data.

The first determination subunit is configured to determine that the communication data satisfies the condition for data processing in response to the first detection subunit determining that the data sending node being in the restricted state, the second detection subunit determining that the communication data satisfying the scheduling condition, and the third detection subunit determining that there being no redundant data corresponding to the communication data.

In an embodiment of the present disclosure, on the basis of the above solution, the second detection subunit is specifically configured to: determine, based on the scheduling information, whether a current communication timeslot is a real-time communication timeslot; determine that the communication data satisfies the scheduling condition, on determining that the current communication timeslot is a real-time communication timeslot; and determine that the communication data does not satisfy the scheduling condition, on determining that the current communication timeslot is a non-real-time communication timeslot.

In an embodiment of the present disclosure, on the basis of the above solution, the receiving unit 401 specifically includes an acquisition subunit and a second determination unit.

The acquisition subunit is configured to obtain a type field of the communication data.

The second determination subunit is configured to determine the data type of the communication data based on the type field.

Specific principles and execution processes of the units and modules in the device for communication data processing disclosed in the embodiments of the present disclosure are the same as the method for communication data processing disclosed in the embodiments of the present disclosure. Reference may be made to corresponding parts of the method for communication data processing provided by the embodiments of the present disclosure, which are not repeated here.

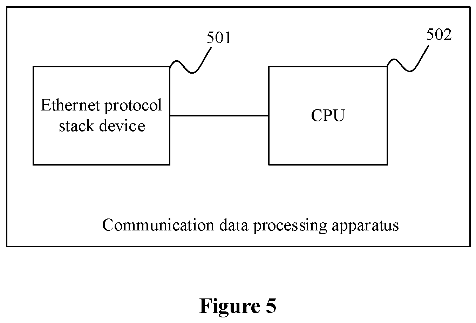

Reference is made to Figure 5, which shows a schematic structural diagram of a communication data processing apparatus according to an embodiment of the present disclosure. The communication data processing apparatus includes: an Ethernet protocol stack device 501 and a CPU 502 connected to the Ethernet protocol stack device. The Ethernet protocol stack device includes at least a software TCP/IP channel and a hardware TCP/IP channel. The hardware TCP/IP channel includes a hardware TCP/IP protocol stack. The CPU is provided with a software TCP/IP protocol stack. The Ethernet protocol stack device is configured to: determine a data type of communication data sent by a preset data sending node, on reception of the communication data within a preset data transmission cycle; determine whether the communication data satisfies a preset condition for data processing, on determining that the communication data is of a real-time data type; on determining that the communication data satisfies the preset condition for data processing, transmit the communication data through the hardware TCP/IP channel, so that the hardware TCP/IP protocol stack performs de-encapsulation on the communication data to obtain target real-time data, and send the target real-time data to the CPU; and on determining that the communication data is of a non-real-time data type, send the communication data to the CPU through the software TCP/IP channel.

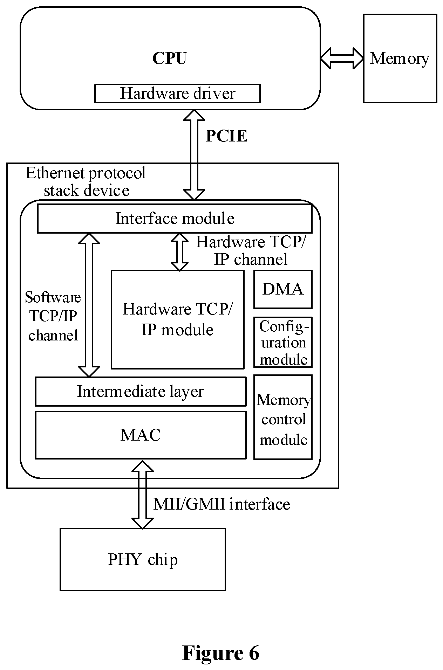

Reference is made to Figure 6, which shows a schematic structural diagram of a communication data processing apparatus according to another embodiment of the present disclosure. In the embodiment of the present disclosure, the communication data processing apparatus includes: an Ethernet protocol stack device, a PHY chip, a CPU and a memory. The Ethernet protocol stack is connected with the PHY chip via an MII interface or GMII interface. The Ethernet protocol stack device is connected with the CPU via a PCIE interface or PCI interface. The CPU is connected to the memory.

In an example, the Ethernet protocol stack device may be an FPGA chip or CPLD chip. The memory may be a double data rate DDR synchronous dynamic random access memory.

The Ethernet protocol stack device is provided with an interface module, a software TCP/IP channel, a hardware TCP/IP channel, a hardware TCP/IP module, a direct memory access DMA, a configuration module, a storage control module, a middle layer, and an MAC control module.

The MAC control module may be configured to receive data transmitted by the PHY chip according to a pre-configured schedule. The MAC module supports time synchronization. The configuration module may be configured to configure and manage various functional modules, for example, to issue a schedule for the MAC control module. The middle layer may be configured to configure an access control function, a diversion function, and the like. For example, for the data received by the MAC control module, the middle layer determines whether to divert the data and whether the data satisfies a receiving condition. The software TCP/IP channel is configured to transmit data allocated by the middle layer, and transmit the data to the CPU through the interface module. The CPU processes the data by using the software protocol stack. The hardware TCP/IP module is configured to process the data allocated by the middle layer and transmit the processed data to the CPU through the interface module. On reception of the data, the CPU performs a corresponding logical operation on the received data and stores in the memory.

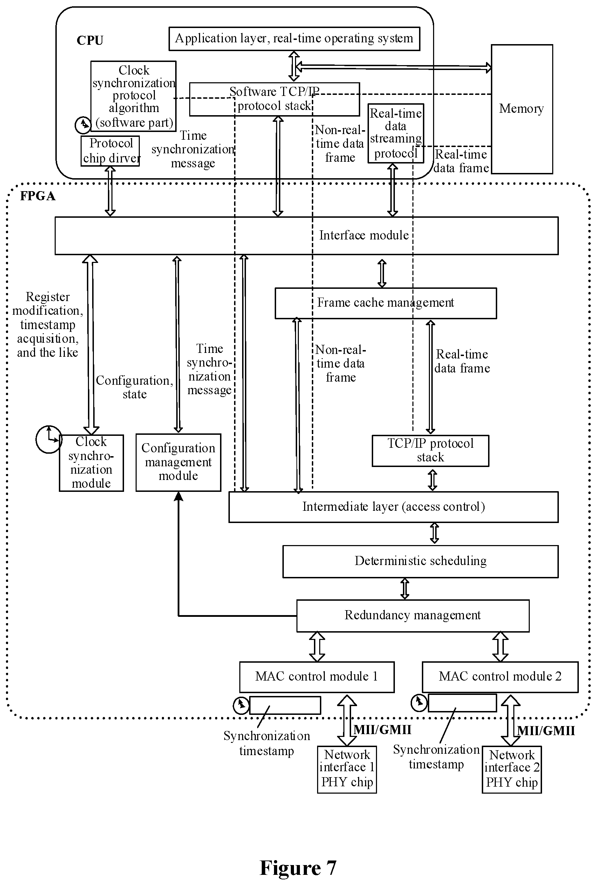

Reference is made to Figure 7, which is a schematic structural diagram of a communication data processing apparatus according to another embodiment of the present disclosure. In the embodiment of the present disclosure, the communication data processing apparatus includes an FPGA, a PHY chip of network interface 1, a PHY chip of network interface 2, a CPU, and a memory.

The FPGA includes an interface module, a clock synchronization module, a configuration module, a frame buffer module, a TCP/IP module, a TCP/IP protocol stack, a middle layer, a deterministic scheduling module, a redundancy management module, an MAC control module 1, and an MAC control module 2. Reference is made to Table 1 below, which provides functional description for the modules according to an embodiment of the present disclosure.

**Table 1**

| No. | Functional module | Functional description |
|---|---|---|
| 1 | Interface module | It is configure to interface with a periphery circuit for data interaction. The interface module includes, For example, a PCIE (peripheral component interconnect express) interface or PCI interface to the CPU, an MII interface or a GMII interface to the Ethernet PHY chip. |
| 2 | Frame buffer management | It is configured to perform data buffer and management for the hardware protocol stack channel (real-time data frame) and the software protocol stack channel (non-real-time data frame) |
| 3 | Clock synchronization | It is configured to: perform identification of a time synchronization message and extraction of timestamp at an Ethernet interface; and provide related information to the CPU to complete a time synchronization algorithm, so as to correct a clock skew, realizing time synchronization with a high precision. |
| 4 | Configuration management | Software may realize configuration and management on each of the functional modules, such as issuing a schedule. |
| 5 | TCP/IP protocol stack | It can realize the following functions: |
| | | ① Encapsulating and de-encapsulating a link layer frame; |
| | | ② Sending and receiving an address Resolution Protocol ARP message; |
| | | ③ Updating and maintaining a high speed ARP table; |
| | | ④ realizing a ping echo function for Internet Group Management Protocol IGMPV1/V2 and Internet Control Message Protocol ICMP; |
| | | ⑤ Encapsulating and de-encapsulating an IP message; |
| | | ⑥ Encapsulating and de-encapsulating a UDP message; |
| | | ⑦ Encapsulating and de-encapsulating a TCP message, and performing connection management; |
| | | ⑧ realizing a Discovery protocol, and the like. |
| 6 | Middle layer (access control) | It Realizes access control functions similar to a hardware firewall, including the following functions. |
| | | ① Distribution function: according to a pre-configured distribution rule, distributing a data frame having a high requirement in real-time to the hardware protocol stack for processing, and distributing a data frame requiring having a low requirement in real-time to the software protocol stack for processing; |
| | | ② Flow control function: according to a pre-configured flow control rule, performing a flow control on a particular IP address, a particular MAC address, a particular IP+MAC address, a particular protocol type, a message of a particular protocol type+ port number, and a total flow. A procedure mode may be configured to be a blacklist mode or whitelist mode; and |
| | | ③ Access control function: according to a pre-configured flow control rule, perform access limitation to a particular IP address, a particular MAC address, and a particular IP+MAC address. A limitation mode may be configured to be a blacklist mode or whitelist mode. |
| 7 | Time-triggering scheduling | It arranges real-time data to be transmitted in a determined real-time communication timeslot. When sending data, the data frame is sent based on a sending schedule, ensuring deterministic of the real-time data, and non-real-time data frame is sent in an interval of real-time communication timeslots. When receiving data, receiving window is checked based on a receiving schedule, a frame satisfying a condition is received, and a frame not satisfying the condition is discarded. |
| 8 | Redundancy management | It supports two network interfaces that each serves as a redundancy for the other, so as to improve reliability of transmission of control data. A sending end may copy a data frame and send copies of the data frame to two redundant networks. A receiving end checks a time of receiving each copy. For effective data frames for the two redundant networks within a receiving window, one of the data frames is eliminated according to a certain strategy, such as a principle of "first come, first take effect". |
| 9 | MAC controller | It performs encapsulation and de-encapsulation on a data frame, applies a flow control rule, and supports time synchronization. |

In an example, the FPGA determines a data type of communication data sent by the PHY chip of network interface 1 or the PHY chip of network interface 2, on reception of the communication data within a data transmission cycle.

On determining that the communication data is of a real-time data type, it is determined whether the communication data satisfies a receiving condition. In response to the communication data satisfying the receiving condition, it is determined, based on preset scheduling information, whether the communication data satisfies a the preset scheduling conditions; in response to the communication data satisfying the scheduling condition, it is determined whether there is redundant data corresponding to the communication data. In response to the redundant data not existing, the hardware protocol stack is used to process the communication data to obtain target real-time data, and the target real-time data is transmitted to the CPU.

On determining that the communication data is of a non-real-time data type, the communication data is sent to the CPU through a pre-set software protocol stack channel.

On reception of a data frame sent by the CPU during the data transmission cycle, a data type of the data frame is determined.

On determining that the data frame is of a real-time data type, the data frame is transmitted through the hardware TCP/IP channel, so that the hardware TCP/IP protocol stack performs encapsulation on the data frame, and the encapsulated data frame is sent to a preset data receiving node.

On determining that the data frame is of a non-real-time data type, the data frame is sent to the preset data receiving node through the software TCP/IP channel

In an embodiment of the present disclosure, the non-real-time data frame is directly communicated through an interaction between the MAC control module in the controller and the software protocol stack in the CPU, and the real-time data frame is transmitted through the hardware TCP/IP protocol stack. Thereby, it is ensured that a delay due to processing on the communication data through protocol stacks is minimal, and a CPU load is reduced.

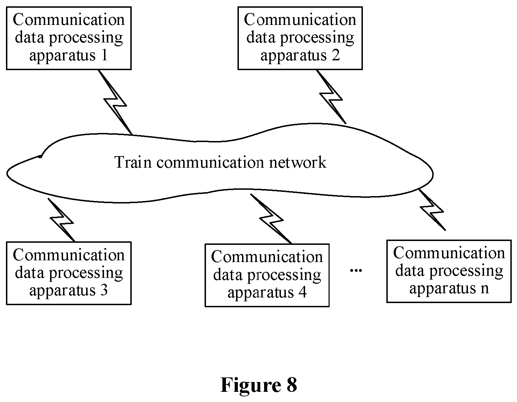

Reference is made to Figure 8, which is a schematic structural diagram of a communication data processing system according to an embodiment of the present disclosure. The communication data processing system specifically includes: n communication data processing apparatuses connected through a train communication network; each of the communication data processing apparatuses includes an Ethernet protocol stack device and a central processing unit CPU connected to the Ethernet protocol stack device. The Ethernet protocol stack device of each of the communication data processing apparatuses includes at least a software TCP/IP channel and a hardware TCP/IP channel. The hardware TCP/IP channel includes a hardware TCP/IP protocol stack. The number n is a positive integer.

The Ethernet protocol stack device of each of the communication data processing apparatuses is configured to: determine a data type of communication data sent by a preset data sending node, on reception of the communication data within a preset data transmission cycle; determine whether the communication data satisfies a preset condition for data processing, on determining that the communication data is of a real-time data type; on determining that the communication data satisfies the preset condition for data processing, transmit the communication data through the hardware TCP/IP channel, so that the hardware TCP/IP protocol stack performs de-encapsulation on the communication data to obtain target real-time data, and send the target real-time data to the CPU connected to the Ethernet protocol stack device; and on determining that the communication data is of a non-real-time data type, send the communication data to the CPU through the software TCP/IP channel. The data sending node may be one or more of other communication data processing apparatuses in the communication data processing system.

The Ethernet protocol stack device of each of the communication data processing apparatuses is further configured to: determine a data type of a data frame sent by the CPU, on receiving the data frame during the data transmission cycle; on determining that the data frame is of a real-time data type, transmit the data frame through the hardware TCP/IP channel, so that the hardware TCP/IP protocol stack performs encapsulation on the data frame, and send the encapsulated data frame to a preset data receiving node; in response to the data frame being in a non-real-time data type, send the data frame to the preset data receiving node through the software TCP/IP channel, where the data receiving node may be one or more of other communication data processing apparatuses in the communication data processing system.

In an embodiment of the present disclosure, an Ethernet protocol stack device with a combined structure of software and hardware is provided to realize a full hardware TCP/IP protocol stack, which can solve the problem of high resource occupation of a processor in an embedded application product developed based on the software TCP/IP protocol stack. On this basis, with the high-precision clock synchronization and deterministic scheduling mechanism of the overall system, the real-time performance, reliability, throughput and other indicators of the system can be greatly improved.

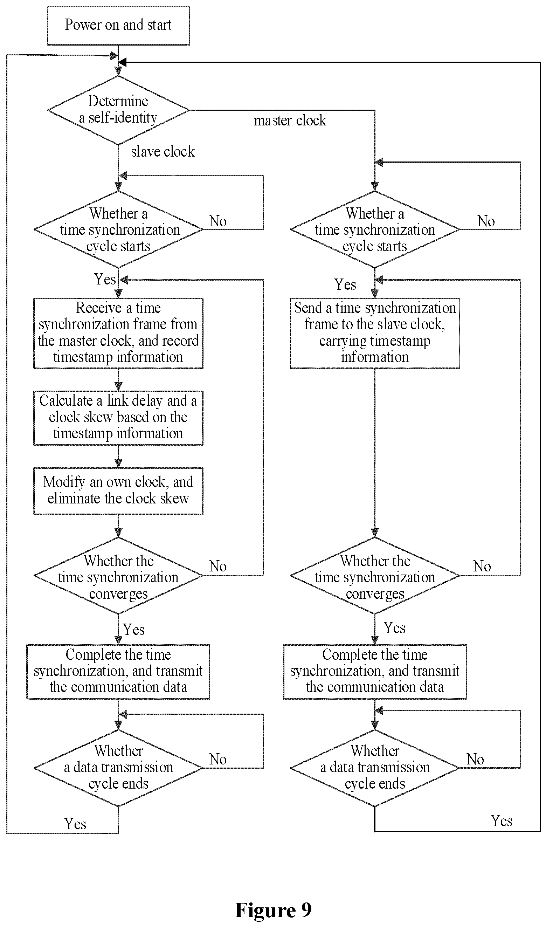

Reference is made to Figure 9. A process of clock synchronization for the overall system is specifically described as follows. The system is powered on and the process starts in response to a clock synchronization instruction. A clock of each communication data processing apparatus in the communication data processing system confirms a self-state. It is determined whether the clock is a master clock or a slave clock in the communication data processing system.

In response to the communication data processing apparatus determining that the clock is the master clock, the master clock sends a time synchronization message to the slave clock on a start of a clock synchronization cycle, the time synchronization message includes time information such as sending timestamp. In response to the clock synchronization converging, the clock synchronization is completed and the master clock enters the data transmission cycle. In response to the clock synchronization not converging, the time synchronization message is sent to the slave clock again after a certain period of time, until the clock synchronization converges.

In response to the communication data processing apparatus determining that the clock is a slave clock, the CPU of the communication data processing apparatus may calculate a link delay and a clock skew based on the timestamp in the received time synchronization message, and correct the clock. In response to the clock synchronization converging, the clock synchronization is completed and the slave clock enters the data transmission cycle. In response to the clock synchronization not converging, the communication data processing apparatus receives the time synchronization message again after a certain period of time to correct the clock, until the clock synchronization converges.

After the time synchronization is completed, the data transmission cycle is started. After an end of the data transmission cycle, the time synchronization cycle starts again to perform time synchronization again.

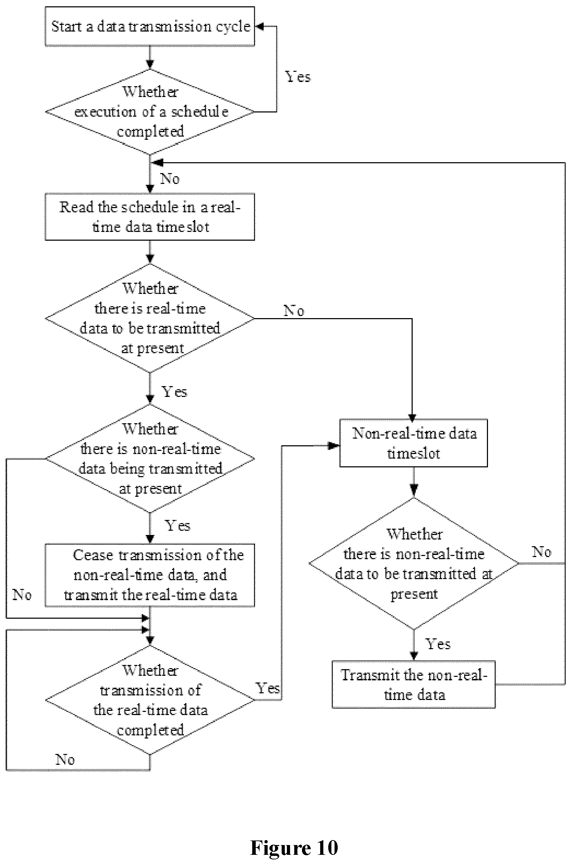

In an example, reference is made to Figure 10. A process of sending data by the communication data processing apparatus in the communication data processing system may include: reading scheduling information before a start of the real-time communication timeslot; determining, based on the scheduling information, whether there is real-time data being transmitted at present; in response to there being real-time data to be transmitted at present, sending the real-time data according to a scheduled time; in response to there being non-real-time data in a previous timeslot being transmitted at present, ceasing transmission of the non-real-time data; after the real-time data timeslot is finished, in response to there being non-real-time data to be transmitted at present in a non-real-time data timeslot, sending the non-real-time data; in response to execution on the schedule being completed, finishing the transmission scheduling of the present cycle and waiting for a next data transmission cycle; and in response to the execution on the schedule not completed, returning to the step of reading the scheduling information before the start of the real-time communication slot.

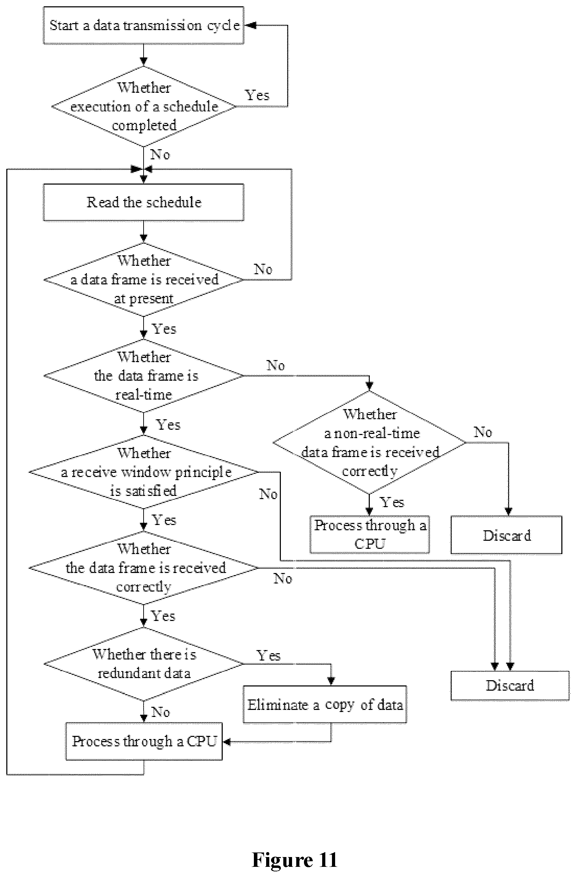

In an example, reference is made to Figure 11. A process of receiving data by a communication data processing apparatus in a communication data processing system may include: reading scheduling information; on reception of a real-time data frame at present, determining whether the real-time data frame satisfies a receiving principle of the schedule and determining whether the real-time data frame is correctly received; in response to the real-time data frame not satisfying the receiving principle of the schedule or the real-time data frame being not correctly received, discarding the data frame; in response to the real-time data frame satisfying the receiving principle of the schedule and the real-time data frame being correctly received, determining whether the real-time data frame is a redundant network frame; in response to the real-time data frame being a redundant network frame, randomly eliminating a copy of the data and submit the data to the CPU for processing; and in response to the real-time data being not a redundant network frame, sending the data frame directly to the CPU for processing through the hardware TCP/IP channel.

In response to the data frame is a non-real-time data frame, it may be determined whether the non-real-time data frame is correctly received. In response to the non-real-time being correctly received, the non-real-time data frame may be sent to the CPU for processing through the software TCP/IP channel; and in response to the non-real-time being not correctly received, the data frame may be discarded.

Herein the embodiments are described in a progressive manner. Each of the embodiments focuses on differences with other embodiments, and the same and similar parts of the embodiments can be referred to each other. Description of the device disclosed in the embodiments is simple, as the device corresponds to the method disclosed in the embodiments. Reference may be made to corresponding description of the method for details of the device.

It should be noted that the relationship terminologies such as first, second or the like are used herein to distinguish one entity or operation from another, rather than to necessitate or imply an actual relationship or order among the entities or operations. Furthermore, terms "include", "comprise" or any other variants are intended to cover a non-exclusive inclusion. Therefore, a process, method, article or device including a series of elements is not necessarily limited to those expressly listed elements, but may include other elements not expressly listed or inherent to the process, method, article, or device. Unless expressively limited otherwise, a statement "comprising (including) one..." does not exclude existence of another similar element in the process, method, article or device.

For the convenience of description, the above devices are described separately in terms of functions thereof. Apparently, in some implementations of the present disclosure, functions of various units may be implemented in a same or different software and/or hardware.

Through the descriptions of the foregoing embodiments, those skilled in the art can clearly understand that the present disclosure may be implemented by means of software and a necessary general hardware platform. Based on such understanding, the technical solutions in the present disclosure or the part contributing on the related art may be implemented in a form of a software product. Such computer software product is stored in a storage medium as described above (such as a read-only memory (ROM) / random access memory (RAM), a magnetic disk, or an optical disc), and may include several instructions for causing a computer device (which may be a personal computer, a server, a network device, or the like) to perform the method described in the embodiments of the present disclosure.

Hereinabove the method for communication data processing provided by the present disclosure is described in detail. In this specification, principles and embodiments of the present disclosure are set forth by way of specific examples. Description of the examples is only intended to facilitate understanding of the method and core concepts of the present disclosure. Meanwhile, for those of ordinary skill in the art, various modifications can be made on the embodiments and applications based on the concept of the present disclosure. In conclusion, the content of the specification shall not be interpreted as a limitation to the present disclosure.

## Claims

1. A method for communication data processing, applied to an Ethernet protocol stack device (501) of a communication data processing apparatus, wherein the Ethernet protocol stack device (501) is connected to a central processor unit CPU (502), the Ethernet protocol stack device (501) comprises at least a software TCP/IP channel and a hardware TCP/IP channel, the hardware TCP/IP channel comprises a hardware TCP/IP protocol stack, and the CPU (502) is provided with a software TCP/IP protocol stack,
wherein the method comprises:
determining (S101) a data type of communication data sent by a preset data sending node, on reception of the communication data within a preset data transmission cycle;
determining (S102) whether the communication data satisfies a preset condition for data processing, on determining that the communication data is of a real-time data type;
transmitting (S103) the communication data through the hardware TCP/IP channel, on determining that the communication data satisfies the preset condition for data processing, wherein the hardware TCP/IP protocol stack performs de-encapsulation on the communication data to obtain target real-time data, which is sent to the CPU (502); and
sending (S105) the communication data to the CPU (502) through the software TCP/IP channel, on determining that the communication data is of a non-real-time data type, wherein the CPU (502) processes the communication data based on the software TCP/IP protocol stack, and
wherein determining the data type of the communication data comprises:
obtaining a type field of the communication data; and
determining the data type of the communication data based on the type field.

2. The method according to claim 1, further comprising:
determining a data type of a data frame sent by the CPU (502), on reception of the data frame within the data transmission cycle;
transmitting the data frame through the hardware TCP/IP channel, on determining that the data frame is of a real-time data type, wherein the hardware TCP/IP protocol stack performs encapsulation on the data frame, and sending the encapsulated data frame to a preset data receiving node; and
sending the data frame to a preset data receiving node through the software TCP/IP channel, on determining that the data frame is of a non-real-time data type.

3. The method according to claim 2, wherein sending the encapsulated data frame to the preset data receiving node comprises:
determining, based on scheduling information, a sending time instant corresponding to the encapsulated data frame;
determining, at the sending time instant, whether there is non-real-time data being transmitted at the sending time instant; and
ceasing transmission of the non-real-time data and sending the encapsulated data frame to the data receiving node, on determining that there is non-real-time data being transmitted at the sending time instant.

4. The method according to claim 2, wherein sending the encapsulated data frame to the preset data receiving node comprises:
determining whether there is to-be-transmitted real-time data at present;
determining a transmission priority of the data frame and a transmission priority of the to-be-transmitted real-time data, on determining that there is to-be-transmitted real-time data at present;
determining a sending time instant of the data frame based on scheduling information, the transmission priority of the data frame, and the transmission priority of the to-be-transmitted real-time data;
determining, at the sending time instant, whether there is non-real-time data being transmitted at the sending time instant; and
ceasing transmission of the non-real-time data and sending the encapsulated data frame to the data receiving node, on determining that there is non-real-time data being transmitted at the sending time instant.

5. The method according to claim 1, further comprising:
determining, in response to a time synchronization instruction, whether a clock corresponding to the Ethernet protocol stack device (501) is a master clock;
on determining that the clock corresponding to the Ethernet protocol stack device (501) is the master clock, generating a time synchronization message, and sending the time synchronization message to a communication data processing apparatus containing a to-be-synchronized clock corresponding to the clock, to trigger a CPU (502) of the communication data processing apparatus to perform clock synchronization based on the time synchronization message on reception of the time synchronization message, wherein the time synchronization message comprises a timestamp; and
entering the data transmission cycle, on determining that the communication data processing apparatus finishes the clock synchronization after receiving the time synchronization message.

6. The method according to claim 1, wherein determining whether the communication data satisfies the preset condition for data processing comprises:
determining, based on a node identification in the communication data, whether the data sending node is in a restricted state;
determining, based on preset scheduling information, whether the communication data satisfies a scheduling condition;
determining whether there is redundant data corresponding to the communication data; and
determining that the communication data satisfies the preset condition for data processing, on determining that the data sending node is in the restricted state, the communication data satisfies the scheduling condition, and there is no redundant data corresponding to the communication data.

7. The method according to claim 6, wherein determining, based on the preset scheduling information, whether the communication data satisfies the scheduling condition comprises:
determining (S201), based on the scheduling information, whether a current communication timeslot is a real-time communication timeslot;
determining (S202) that the communication data satisfies the scheduling condition, on determining that the current communication timeslot is a real-time communication timeslot; and
determining (S203) that the communication data does not satisfy the scheduling condition, on determining that the current communication timeslot is a non-real-time communication timeslot.

8. A device for communication data processing for a communication data processing apparatus, the device comprising an Ethernet protocol stack device (501) and a CPU (502), wherein the Ethernet protocol stack device (501) is connected to the central processor unit CPU (502), the Ethernet protocol stack device (501) comprises at least a software TCP/IP channel and a hardware TCP/IP channel, the hardware TCP/IP channel comprises a hardware TCP/IP protocol stack, the CPU (502) is provided with a software TCP/IP protocol stack,
wherein the device is configured to perform the method according to any one of claims 1 to 7.

## Patentansprüche

1. Verfahren zum Kommunikationsdatenverarbeiten, das auf eine Ethernet-Protokollstapelvorrichtung (501) einer Kommunikationsdatenverarbeitungsvorrichtung angewendet wird, wobei die Ethernet-Protokollstapelvorrichtung (501) mit einer Zentraleinheit CPU (502) verbunden ist, die Ethernet-Protokollstapelvorrichtung (501) mindestens einen Software-TCP/IP-Kanal und einen Hardware-TCP/IP-Kanal umfasst, der Hardware-TCP/IP-Kanal einen Hardware-TCP/IP-Protokollstapel umfasst und die CPU (502) mit einem Software-TCP/IP-Protokollstapel versehen ist,
wobei das Verfahren umfasst:
Bestimmen (S101) eines Datentyps von Kommunikationsdaten, die von einem voreingestellten Datensendeknoten gesendet wurden, beim Empfang der Kommunikationsdaten innerhalb eines voreingestellten Datenübertragungszyklus;
Bestimmen (S102), ob die Kommunikationsdaten eine voreingestellte Bedingung zum Datenverarbeiten erfüllen, wenn bestimmt wird, dass es sich bei den Kommunikationsdaten um einen Echtzeit-Datentyp handelt;
Übertragen (S103) der Kommunikationsdaten über den Hardware-TCP/IP-Kanal, wenn bestimmt wird, dass die Kommunikationsdaten die voreingestellte Bedingung zum Datenverarbeiten erfüllen, wobei der Hardware-TCP/IP-Protokollstapel eine Entkapselung der Kommunikationsdaten durchführt, um Echtzeit-Zieldaten zu erhalten, die an die CPU (502) gesendet werden; und
Senden (S105) der Kommunikationsdaten an die CPU (502) über den Software-TCP/IP-Kanal, wenn bestimmt wird, dass es sich bei den Kommunikationsdaten um einen Nicht-Echtzeit-Datentyp handelt, wobei die CPU (502) die Kommunikationsdaten anhand des Software-TCP/IP-Protokollstapels verarbeitet, und
wobei das Bestimmen des Datentyps der Kommunikationsdaten umfasst:
Erhalten eines Typfeldes der Kommunikationsdaten; und
Bestimmen des Datentyps der Kommunikationsdaten anhand des Typfeldes.

2. Verfahren nach Anspruch 1, ferner umfassend:
Bestimmen eines Datentyps eines Datenrahmens, der von der CPU (502) gesendet wird, beim Empfang des Datenrahmens innerhalb des Datenübertragungszyklus;
Übertragen des Datenrahmens über den Hardware-TCP/IP-Kanal, wenn bestimmt wird, dass es sich bei dem Datenrahmen um einen Echtzeit-Datentyp handelt, wobei der Hardware-TCP/IP-Protokollstapel eine Verkapselung des Datenrahmens durchführt, und Senden des verkapselten Datenrahmens an einen voreingestellten Datenempfangsknoten; und
Senden des Datenrahmens an einen voreingestellten Datenempfangsknoten über den Software-TCP/IP-Kanal, wenn bestimmt wird, dass es sich bei dem Datenrahmen um einen Nicht-Echtzeit-Datentyp handelt.

3. Verfahren nach Anspruch 2, wobei das Senden des verkapselten Datenrahmens an den voreingestellten Datenempfangsknoten Folgendes umfasst:
Bestimmen, anhand von Planungsinformationen, eines Sendezeitpunkts, der dem verkapselten Datenrahmen entspricht;
Bestimmen, zum Sendezeitpunkt, ob Nicht-Echtzeitdaten zum Sendezeitpunkt übertragen werden; und
Beenden der Übertragung der Nicht-Echtzeitdaten und Senden des verkapselten Datenrahmens an den Datenempfangsknoten, wenn bestimmt wird, dass Nicht-Echtzeitdaten zum Sendezeitpunkt übertragen werden.

4. Verfahren nach Anspruch 2, wobei das Senden des verkapselten Datenrahmens an den voreingestellten Datenempfangsknoten Folgendes umfasst:
Bestimmen, ob gegenwärtig zu übertragende Echtzeitdaten vorhanden sind;
Bestimmen einer Übertragungspriorität des Datenrahmens und einer Übertragungspriorität der zu übertragenden Echtzeitdaten, wenn bestimmt wird, dass gegenwärtig zu übertragende Echtzeitdaten vorhanden sind;
Bestimmen eines Sendezeitpunkts des Datenrahmens anhand von Planungsinformationen, der Übertragungspriorität des Datenrahmens und der Übertragungspriorität der zu übertragenden Echtzeitdaten;
Bestimmen, zum Sendezeitpunkt, ob Nicht-Echtzeitdaten zum Sendezeitpunkt übertragen werden; und
Beenden der Übertragung der Nicht-Echtzeitdaten und Senden des verkapselten Datenrahmens an den Datenempfangsknoten, wenn bestimmt wird, dass Nicht-Echtzeitdaten zum Sendezeitpunkt übertragen werden.

5. Verfahren nach Anspruch 1, ferner umfassend:
Bestimmen, als Reaktion auf eine Zeitsynchronisationsanweisung, ob ein Takt, der der Ethernet-Protokollstapelvorrichtung (501) entspricht, ein Haupttakt ist;
beim Bestimmen, dass der Takt, der der Ethernet-Protokollstapelvorrichtung (501) entspricht, der Haupttakt ist, Erzeugen einer Zeitsynchronisationsnachricht und Senden der Zeitsynchronisationsnachricht an eine Kommunikationsdatenverarbeitungsvorrichtung, die einen zu synchronisierenden Takt enthält, die dem Takt entspricht, um eine CPU (502) der Kommunikationsdatenverarbeitungsvorrichtung zu veranlassen, eine Taktsynchronisation anhand der Zeitsynchronisationsnachricht beim Empfang der Zeitsynchronisationsnachricht durchzuführen, wobei die Zeitsynchronisationsnachricht einen Zeitstempel umfasst; und
Eintreten in den Datenübertragungszyklus, wenn bestimmt wird, dass die Kommunikationsdatenverarbeitungsvorrichtung die Taktsynchronisation nach dem Empfangen der Zeitsynchronisationsnachricht beendet hat.

6. Verfahren nach Anspruch 1, wobei das Bestimmen, ob die Kommunikationsdaten die voreingestellte Bedingung zum Datenverarbeiten erfüllen, Folgendes umfasst:
Bestimmen, anhand einer Knotenidentifikation in den Kommunikationsdaten, ob sich der Datensendeknoten in einem eingeschränkten Zustand befindet;
Bestimmen, anhand voreingestellter Planungsinformationen, ob die Kommunikationsdaten eine Planungsbedingung erfüllen;
Bestimmen, ob redundante Daten vorhanden sind, die den Kommunikationsdaten entsprechen; und
Bestimmen, dass die Kommunikationsdaten die voreingestellte Bedingung zum Datenverarbeiten erfüllen, wenn bestimmt wird, dass sich der Datensendeknoten in dem eingeschränkten Zustand befindet, die Kommunikationsdaten die Planungsbedingung erfüllen und keine redundanten Daten vorhanden sind, die den Kommunikationsdaten entsprechen.

7. Verfahren nach Anspruch 6, wobei das Bestimmen, anhand der voreingestellten Planungsinformationen, ob die Kommunikationsdaten die Planungsbedingung erfüllen, Folgendes umfasst:
Bestimmen (S201), anhand der Planungsinformationen, ob ein aktuelles Kommunikationszeitfenster ein Echtzeit-Kommunikationszeitfenster ist;
Bestimmen (S202), dass die Kommunikationsdaten die Planungsbedingung erfüllen, wenn bestimmt wird, dass das aktuelle Kommunikationszeitfenster ein Echtzeit-Kommunikationszeitfenster ist; und
Bestimmen (S203), dass die Kommunikationsdaten die Planungsbedingung nicht erfüllen, wenn bestimmt wird, dass das aktuelle Kommunikationszeitfenster ein Nicht-Echtzeit-Kommunikationszeitfenster ist.

8. Vorrichtung zum Kommunikationsdatenverarbeiten für eine Kommunikationsdatenverarbeitungsvorrichtung, wobei die Vorrichtung eine Ethernet-Protokollstapelvorrichtung (501) und eine CPU (502) umfasst, wobei die Ethernet-Protokollstapelvorrichtung (501) mit der CPU (502) verbunden ist, die Ethernet-Protokollstapelvorrichtung (501) mindestens einen Software-TCP/IP-Kanal und einen Hardware-TCP/IP-Kanal umfasst, der Hardware-TCP/IP-Kanal einen Hardware-TCP/IP-Protokollstapel umfasst, die CPU (502) mit einem Software-TCP/IP-Protokollstapel versehen ist,
wobei die Vorrichtung derart konfiguriert ist, dass sie das Verfahren nach einem der Ansprüche 1 bis 7 durchführt.

## Revendications

1. Procédé de traitement de données de communication, appliqué à un dispositif de pile de protocoles Ethernet (501) d'un appareil de traitement de données de communication, dans lequel le dispositif de pile de protocoles Ethernet (501) est connecté à une unité centrale de traitement CPU (502), le dispositif de pile de protocoles Ethernet (501) comprend au moins un canal TCP/IP logiciel et un canal TCP/IP matériel, le canal TCP/IP matériel comprend une pile de protocoles TCP/IP matériels, et la CPU (502) est pourvue d'une pile de protocoles TCP/IP logiciels,
dans lequel le procédé comprend :
la détermination (E101) d'un type de données de communication envoyées par un nœud d'envoi de données prédéfini, à la réception des données de communication dans un cycle de transmission de données prédéfini ;
la détermination (E102) si les données de communication satisfont ou non une condition prédéfinie pour le traitement de données, lorsqu'il est déterminé que les données de communication sont d'un type de données en temps réel ;
la transmission (E103) des données de communication par l'intermédiaire du canal TCP/IP matériel, lorsqu'il est déterminé que les données de communication satisfont la condition prédéfinie pour le traitement de données, dans lequel la pile de protocoles TCP/IP matériels réalise la désencapsulation sur les données de communication pour obtenir des données en temps réel cibles, qui sont envoyées à la CPU (502) ; et
l'envoi (E105) des données de communication à la CPU (502) par l'intermédiaire du canal TCP/IP logiciel, lorsqu'il est déterminé que les données de communication sont d'un type de données non en temps réel, dans lequel la CPU (502) centrale traite les données de communication sur la base de la pile de protocoles TCP/IP logiciels, et
dans lequel la détermination du type de données des données de communication comprend :
l'obtention d'un champ de type des données de communication ; et
la détermination du type de données des données de communication sur la base du champ de type.

2. Procédé selon la revendication 1, comprenant en outre :
la détermination d'un type de données d'une trame de données envoyée par la CPU (502), à la réception de la trame de données dans le cycle de transmission de données ;
la transmission de la trame de données par l'intermédiaire du canal TCP/IP matériel, lorsqu'il est déterminé que la trame de données est d'un type de données en temps réel, dans lequel la pile de protocoles TCP/IP matériels réalise l'encapsulation sur la trame de données, et l'envoi de la trame de données encapsulée à un nœud de réception de données prédéfini ; et
l'envoi de la trame de données à un nœud de réception de données prédéfini par l'intermédiaire du canal TCP/IP logiciel, lorsqu'il est déterminé que la trame de données est d'un type de données non en temps réel.

3. Procédé selon la revendication 2, dans lequel l'envoi de la trame de données encapsulée au nœud de réception de données prédéfini comprend :
la détermination, sur la base d'informations de planification, d'un instant d'envoi correspondant à la trame de données encapsulée ;
la détermination, à l'instant d'envoi, si des données non en temps réel ont été transmises à l'instant d'envoi ou non ; et
l'arrêt de la transmission des données non en temps réel et l'envoi de la trame de données encapsulée au nœud de réception de données, lorsqu'il est déterminé que des données non en temps réel ont été transmises à l'instant d'envoi.

4. Procédé selon la revendication 2, dans lequel l'envoi de la trame de données encapsulée au nœud de réception de données prédéfini comprend :
la détermination s'il existe des données en temps réel à transmettre actuellement ;
la détermination d'une priorité de transmission de la trame de données et d'une priorité de transmission des données en temps réel à transmettre, lorsqu'il est déterminé qu'il existe des données en temps réel à transmettre actuellement ;
la détermination d'un instant d'envoi de la trame de données sur la base d'informations de planification, de la priorité de transmission de la trame de données, et de la priorité de transmission des données en temps réel à transmettre ;
la détermination, à l'instant d'envoi, si des données non en temps réel ont été transmises ou non à l'instant d'envoi ; et
l'arrêt de la transmission des données non en temps réel et l'envoi de la trame de données encapsulée au nœud de réception de données, lorsqu'il est déterminé que des données non en temps réel ont été transmises à l'instant d'envoi.

5. Procédé selon la revendication 1, comprenant en outre :
la détermination, en réponse à une instruction de synchronisation temporelle, si une horloge correspondant au dispositif de pile de protocoles Ethernet (501) est une horloge maître ou non ;
lorsqu'il est déterminé que l'horloge correspondant au dispositif de pile de protocoles Ethernet (501) est l'horloge maître, la génération d'un message de synchronisation temporelle, et l'envoi du message de synchronisation temporelle à un appareil de traitement de données de communication contenant une horloge à synchroniser correspondant à l'horloge, pour déclencher la réalisation par une CPU (502) de l'appareil de traitement de données de communication d'une synchronisation d'horloge sur la base du message de synchronisation temporelle à la réception du message de synchronisation temporelle, dans lequel le message de synchronisation temporelle comprend un horodatage ; et
l'entrée dans le cycle de transmission de données, lorsqu'il est déterminé que l'appareil de traitement de données de communication termine la synchronisation d'horloge après la réception du message de synchronisation temporelle.

6. Procédé selon la revendication 1, dans lequel la détermination si les données de communication satisfont ou non la condition prédéfinie pour le traitement de données comprend :
la détermination, sur la base d'une identification de nœud dans les données de communication, si le nœud d'envoi de données est dans un état restreint ou non ;
la détermination, sur la base d'informations de planification prédéfinies, si les données de communication satisfont ou non une condition de planification ;
la détermination s'il existe des données redondantes correspondant aux données de communication ou non ; et
la détermination que les données de communication satisfont la condition prédéfinie pour le traitement de données, lorsqu'il est déterminé que le nœud d'envoi de données est dans l'état restreint, que les données de communication satisfont la condition de planification, et qu'il n'existe pas de données redondantes correspondant aux données de communication.

7. Procédé selon la revendication 6, dans lequel la détermination, sur la base des informations de planification prédéfinies, si les données de communication satisfont ou non la condition de planification comprend :
la détermination (E201), sur la base des informations de planification, si un intervalle de temps de communication actuel est un intervalle de temps de communication en temps réel ou non ;
la détermination (E202) que les données de communication satisfont la condition de planification, lorsqu'il est déterminé que l'intervalle de temps de communication actuel est un intervalle de temps de communication en temps réel ; et
la détermination (E203) que les données de communication ne satisfont pas la condition de planification, lorsqu'il est déterminé que l'intervalle de temps de communication actuel est un intervalle de temps de communication non en temps réel.

8. Dispositif de traitement de données de communication, pour un appareil de traitement de données de communication, le dispositif comprenant un dispositif de pile de protocoles Ethernet (501) et une CPU (502), dans lequel le dispositif de pile de protocoles Ethernet (501) est connecté à l'unité centrale de traitement CPU (502), le dispositif de pile de protocoles Ethernet (501) comprend au moins un canal TCP/IP logiciel et un canal TCP/IP matériel, le canal TCP/IP matériel comprend une pile de protocoles TCP/IP matériels, la CPU (502) est pourvue d'une pile de protocoles TCP/IP logiciels,
dans lequel le dispositif est configuré pour réaliser le procédé selon l'une quelconque des revendications 1 à 7.
